# EUROPÄISCHE PATENTANMELDUNG

(11) **EP 3 797 904 A1**
(43) Veröffentlichungstag der Anmeldung: **31.03.2021**
(21) Anmeldenummer: 19200117.0
(22) Anmeldetag: 27.09.2019
(51) Int. Cl.: B22F 3/105, B33Y 10/00, B33Y 30/00

(54) **ADDITIVES HERSTELLUNGSVERFAHREN MIT HÄRTUNG**

(71) Anmelder: Flender GmbH, 46395 Bocholt (DE)
(72) Erfinder: Dinter, Ralf Martin, 45888 Gelsenkirchen (DE)
(74) Vertreter: Maier, Daniel Oliver

(57) **Zusammenfassung**

Die Erfindung betrifft ein Verfahren (100) zum additiven Herstellen einer Maschinenkomponente (10). Das Verfahren (100) umfasst einen ersten Schritt (110), in dem ein Bereitstellen zumindest einer Materiallage (12) erfolgt. Es folgt ein zweiter Schritt (120), in dem ein Bestrahlen der Materiallage (12) mit einem Laser (20) zu einem lokalen Aufschmelzen der Materiallage (12) durchgeführt wird. Erfindungsgemäß wird im ersten Schritt (110) einem Grundmaterial (30) der Materiallage (12) lokal einstellbar ein Härtungsmittel (42) hinzugefügt wird, und das Härtungsmittel (42) im zweiten Schritt (120) durch das Bestrahlen mit dem Laser (20) im Grundmaterial (30) zumindest eingeschlossen wird.

## Beschreibung

Die Erfindung betrifft ein additives Herstellungsverfahren für Maschinenkomponenten mit einer integrierten Härtung. Die Erfindung betrifft auch ein Computerprogrammprodukt, mit dem das erfindungsgemäße Verfahren ausführbar ist. Ferner betrifft die Erfindung eine Steuereinheit, die über ein solches Computerprogrammprodukt verfügt und eine Fertigungsvorrichtung, die einer entsprechenden Steuereinheit ausgestattet ist. Des Weiteren betrifft die Erfindung eine Maschinenkomponente, die insbesondere mit dem erfindungsgemäßen Verfahren herstellbar ist.

Aus der Druckschrift DE 10 2004 008 054 A1 ist ein Verfahren zum Herstellen eines dreidimensionalen Gegenstands bekannt, bei dem eine Metallpulverschicht erzeugt wird. Auf die Metallpulverschicht wirkt ein Laserstrahl ein um die Metallpulverschicht aufzuschmelzen. Es wird eine Metallpulverzusammensetzung verwendet, die Pulvermaterial auf Eisenbasis, ein Nickel- und/oder Nickellegierungs-Pulvermaterial, ein Kupfer- und/oder Kupferlegierungs-Pulvermaterial und ein Graphit-Pulvermaterial einschließt.

In verschiedenen technischen Gebieten besteht die Zielsetzung, auch mechanisch stark beanspruchte Maschinenkomponenten mittels additiver Fertigung herzustellen. Insbesondere wird angestrebt, auch Maschinenkomponenten, die eine hohe Härte erfordern, per additiver Fertigung herzustellen. Gleichzeitig besteht die Zielsetzung, die Herstellung solcher mechanisch hoch beanspruchter Maschinenkomponenten zu vereinfachen und gleichzeitig die konstruktive Freiheit in der Auslegung solcher Maschinenkomponenten zu erhöhen. Der Erfindung liegt die Aufgabe zugrunde, eine Möglichkeit bereitzustellen, anspruchsvolle Maschinenkomponenten mittel additiver Fertigung herzustellen.

Die Aufgabenstellung wird durch das erfindungsgemäße Verfahren gelöst, das darauf ausgerichtet ist, eine Maschinenkomponente durch additive Fertigung herzustellen. Das Verfahren umfasst einen ersten Schritt, in dem zumindest eine Materiallage bereitgestellt wird. Die Materiallage kann dazu von zumindest einer Abgabevorrichtung im Wesentlichen flächig in einem Arbeitsbereich aufgebracht werden. In einem zweiten Schritt erfolgt ein Bestrahlen der Materiallage mit einem Laser. Durch das Bestrahlen mit dem Laser wird die Materiallage lokal aufgeschmolzen. Der so lokal aufgeschmolzene Bereich verfestigt sich nach dem Bestrahlen mit dem Laser selbsttätig durch eine Wärmeabgabe. Die Materiallage wird vom Laser im zweiten Schritt im Wesentlichen in einem Muster abgefahren und entsprechend bestrahlt. Die Materiallage, die im ersten Schritt aufgebracht wird, umfasst ein Grundmaterial.

Erfindungsgemäß umfasst die Materiallage auch ein Härtungsmittel, das dem Grundmaterial hinzufügbar ist. Das Härtungsmittel wird im ersten Schritt dem Grundmaterial lokal in einstellbarer Weise hinzugefügt. Das Hinzufügen des Härtungsmittels ist insoweit einstellbar, dass das vorgebbar ist, welche Menge an Härtungsmittel an einem wählbaren Ort an der Oberfläche der Materiallage dem Grundmaterial hinzugefügt wird. Insbesondere ist dadurch ein Konzentrationsgradient für das Härtungsmittel innerhalb einer Ebene einstellbar, die durch die Materiallage definiert ist. Dadurch wird eine lokal veränderliche anteilige Zusammensetzung der Materiallage in puncto Grundmaterial und Härtungsmittel hervorgerufen. Weiter erfindungsgemäß wird das Härtungsmittel im zweiten Schritt, in dem die Materiallage mit dem Laser bestrahlt wird, im Grundmaterial zumindest eingeschlossen. Durch das lokale Aufschmelzen der Materiallage, insbesondere des Grundmaterials, wird so ein thermischer bzw. chemischer und physikalischer Zustand hervorgerufen, in dem sich das Härtungsmittel im geschmolzenen Grundmaterial bei einem Erstarren zumindest eingelagert, also eingeschlossen wird.

Durch das Einschließen des Härtungsmittels wird im Grundmaterial zumindest eine Härtung vorbereitet. Je höher die lokal vorliegende Konzentration an Härtungsmittel, umso stärker kann die Härtung werden. Hierdurch wird die Herstellung einer Maschinenkomponente, die eine Härtung erfordert, beschleunigt werden. Durch das einstellbare Hinzufügen von Härtungsmittel kann die Härtung der herzustellenden Maschinenkomponente in vorgebbarer Weise durchgeführt werden. Insbesondere können Bereiche, in denen eine verstärkte oder verringerte Härtung angestrebt wird, im Wesentlichen willkürlich festgelegt werden. Beispielsweise ist so ein Aufkohlen entbehrlich, bei dem sich die Verteilung des im Metall einzulagernden Kohlenstoffs aus dem Diffusionsverhalten in der Aufkohlungsatmosphäre ergibt. Insgesamt wird durch das erfindungsgemäße Verfahren eine Möglichkeit bereitgestellt, die ein schnelles Herstellen von gehärteten Maschinenkomponenten per additiver Fertigung erlaubt und durch die Einstellbarkeit einer lokalen Härte ein hohes Maß an konstruktiver Freiheit bietet.

In einer Ausführungsform des beanspruchten Verfahrens kann im zweiten Schritt, in dem die Materiallage mit dem Laser bestrahlt wird, zumindest teilweise im Grundmaterial gelöst. Durch die mittels des Lasers lokal eingebrachte Wärmeenergie wird eine Diffusion des eingeschlossenen Härtungsmittels in das Grundmaterial hinein ermöglicht. Hierbei können beispielsweise Atome des Härtungsmittels in elementarer Form in einem Atomgitter des Grundmaterials eingelagert werden. Durch eine zumindest teilweise Diffusion des Härtungsmittels ins Grundmaterial kann ein späterer Diffusionsprozess verkürzt werden.

In einer weiteren Ausführungsform des beanspruchten Verfahrens kann lokal eine Abgabemenge des Härtungsmittels eingestellt werden. Hierzu kann eine Abgabevorrichtung, durch die das Härtungsmittel dem Grundmaterial hinzugefügt wird, entsprechend angesteuert werden. Beispielsweise kann eine Öffnungsdauer, Öffnungsweite und/oder Förderdruck an einer Abgabedüse der Abgabevorrichtung eingestellt werden. Folglich kann die lokale Verteilung des Härtungsmittels durch einen einfachen Parameter einer entsprechenden Fertigungsvorrichtung vorgebbar. Ferner kann eine Schichtdicke der Materiallage eingestellt werden um so die zu erzielende Härteverteilung zu beeinflussen.

Des Weiteren kann das Verfahren einen dritten Schritt umfassen, in dem die Maschinenkomponente gehärtet wird. Die Maschinenkomponente, die im ersten und zweiten Schritt aus mehreren mit Laser bestrahlten Materiallagen aufgebaut ist, wird hierzu einer Umgebung mit einer einstellbaren Prozesstemperatur ausgesetzt, beispielsweise einem Härteofen. Im dritten Schritt wird die Maschinenkomponente auf eine Temperatur erwärmt, in der eine Diffusion des im Grundmaterial gelösten Härtungsmittels eintritt. Dadurch, dass wie bereits im ersten und zweiten Schritt skizziert, die Verteilung des Härtungsmittels durch ein lokal einstellbares Hinzufügen zum Grundmaterial bereits gezielt vorgebbar ist, können Diffusionsstrecken für das Härtungsmittel im Grundmaterial verkürzt werden. Unter einer Diffusionsstrecke ist dabei die Distanz zu verstehen, die Härtungsmittel bis zum Erreichen einer angestrebten Konzentrationsverteilung in der Maschinenkomponente durch Diffusion zurückzulegen hat. Ein Verkürzen der Diffusionsstrecken erlaubt es, bei reduzierter Prozessdauer, der die Maschinenkomponente der Umgebung mit Prozesstemperatur ausgesetzt ist, eine angestrebte Verteilung bzw. Konzentrationsverteilung des Härtungsmittels zu erreichen. Ferner erlaubt eine verkürzte Prozessdauer bei der Diffusion, ein Auftreten von Randoxidationen an der Oberfläche der Maschinenkomponente zu verringern oder ganz zu vermeiden. Hierdurch wiederum ist beispielsweise bei Verzahnungen die Neigung zu Zahnfußbruch oder zu Zahnflankenbruch verringert. Insgesamt kann ein Härtungsvorgang, und damit die gesamte Herstellung der Maschinenkomponente so bei erhöhter Qualität beschleunigt werden. Alternativ oder ergänzend kann die gleiche Diffusionsstrecke bei gleichbleibender Prozessdauer mit verringerter Prozesstemperatur erzielt werden. Dies erlaubt eine Energieersparnis in der Herstellung der Maschinenkomponente.

Darüber hinaus kann das Härtungsmittel als Kohlenstoff-Pulver oder als Kohlenstoff-Flüssigkeit ausgebildet sein. Darunter ist insbesondere ein Pulver bzw. eine Flüssigkeit zu verstehen, die elementaren Kohlenstoff enthalten. Ein Beispiel für ein Kohlenstoff-Pulver kann beispielsweise Graphitpulver sein; eine Kohlenstoff-Flüssigkeit eine Flüssigkeit mit darin gelöstem Graphitpulver. Kohlenstoff-Pulver und Kohlenstoff-Flüssigkeit erlauben es, aufgrund ihrer einfachen Dosierbarkeit in präziser Weise, lokal dem Grundmaterial im Wesentlichen elementaren Kohlenstoff hinzuzufügen. Kohlenstoff-Pulver kann in einer Abgabevorrichtung für Grundmaterial, das auch im Wesentlichen ein Pulver ist, mit diesem vermischt werden. Kohlenstoff-Flüssigkeit wiederum wird durch das pulverförmige Grundmaterial gebunden, so dass auch so eine präzise Verteilung von Kohlenstoff auf der Materiallage möglich ist.

In einer weiteren Ausführungsform des beanspruchten Verfahrens kann das Grundmaterial eine Eisen-basierte Legierung, also im Wesentlichen ein Stahl, eine Manganlegierung oder eine Nickel-Basislegierung sein. Derartige Werkstoffe sind in Pulverform in vorteilhafter Weise mit Bestrahlen mit Laser schmelzbar und ergeben bei entsprechenden additiven Fertigungsverfahren ein hochqualitatives Gefüge. Darüber hinaus existieren für derartige Werkstoffe erprobte und zuverlässige additive Fertigungsverfahren, wie beispielweise Selektives Laserschmelzen, auch selective laser melting genannt.

Ferner kann das beanspruchte Verfahren, insbesondere der erste und zweite Schritt, für eine Mehrzahl an Materiallagen wiederholt durchgeführt werden. Somit kann nicht nur ein Konzentrationsgradient für das Härtungsmittel innerhalb einer Ebene einer Materiallage eingestellt werden, sondern auch über mehrere Materiallagen hinweg senkrecht zu deren Ebenen. Eine Verteilung des Härtungsmittels kann somit dreidimensional in der Maschinenkomponente eingestellt werden. Da die Verteilung des Härtungsmittels mit einer Härteverteilung in einer fertigen Maschinenkomponenten korrespondiert, wird so ein hoher Grad an konstruktiver Freiheit für die Maschinenkomponente gewährleistet.

Des Weiteren kann beim beanspruchten Verfahren eine Intensität des Lasers einstellbar sein, so dass eine vom Laser in die Materiallage eingebrachte Wärmeenergie vorgebbar ist. Die Intensität des Lasers kann während des zweiten Schritts, in dem die Materiallage bestrahlt wird, derart vorgegeben werden, dass eine Diffusion des Härtungsmittels in das Grundmaterial zumindest eingeleitet wird. Dadurch kann eine Härte der Maschinenkomponente bereits während der additiven Fertigung eingestellt werden und gegebenenfalls ein späterer Diffusionsschritt verkürzt werden oder entbehrlich werden. Dementsprechend wird so die mit dem beanspruchten Verfahren erzielte konstruktive Freiheit in puncto Härteverteilung weiter gesteigert.

In einer weiteren Ausführungsform des beanspruchten Verfahrens kann die Materiallage einen ersten und einen zweiten Werkstoff umfassen, die in einstellbarer Weise lokal verteilt die Materiallage ausbilden können. Dadurch können beispielsweise Abschnitte, die im Wesentlichen im Inneren der herzustellenden Maschinenkomponente liegen, aus einem einfachen ersten Werkstoff hergestellt sein, der nur eine reduzierte Eignung zur Härtung aufweist. Weiter außen liegende Abschnitte hingegen, für die eine Härtung geboten ist, können beispielsweise aus einem gut zur Härtung geeigneten zweiten Werkstoff hergestellt sein. Dadurch wird insgesamt eine Materialausnutzung verbessert und gleichzeitig die Kosteneffizienz gesteigert.

Die zugrundeliegende Aufgabenstellung wird auch durch das erfindungsgemäße Computerprogrammprodukt gelöst. Das Computerprogrammprodukt ist dazu ausgebildet, in einem Speicher und einem Rechenwerk einer Steuereinheit ausgeführt zu werden und ist auf einem nicht-flüchtigen Speicher speicherbar. Das Computerprogrammprodukt ist dazu ausgebildet, Konstruktionsdaten für eine additive Fertigung einer Maschinenkomponente zu empfangen, die auch Angaben über eine lokal angestrebte Härte der Maschinenkomponente umfasst. Das Computerprogrammprodukt ist auch dazu ausgebildet, daraus Steuerbefehle zu ermitteln, die an eine Abgabevorrichtung für ein Härtungsmittel und einen Laser ausgebbar sind. Die Abgabevorrichtung und der Laser gehören dabei zu einer Fertigungsvorrichtung für eine additive Fertigung, beispielsweise eine Anlage für Selektives Laserschmelzen. Das Computerprogrammprodukt ist dazu ausgebildet, zumindest eines der oben skizzierten Verfahren durchzuführen. Das Computerprogrammprodukt kann als Software oder festverdrahtet, oder eine Kombination hiervor ausgebildet sein. Unter festverdrahtet ist hierbei beispielsweise ein Chip, eine Integrierte Schaltung oder ein FPGA zu verstehen. Ferner kann das Computerprogrammprodukt monolithisch oder modular ausgebildet sein. Unter monolithisch ist zu verstehen, dass das Computerprogrammprodukt allein auf einer Hardwareplattform ausführbar ist. Modular ist zu verstehen, dass das Computerprogrammprodukt zumindest zwei Teilprogramme umfasst, die auf unterschiedlichen Hardwareplattformen ausführbar sind und die im bestimmungsgemäßen Betrieb über eine Datenverbindung zusammenwirken um das beanspruchte Verfahren umzusetzen. Dies kann beispielsweise durch eine Steuereinheit in einer Fertigungsvorrichtung verwirklicht sein, die mit einem Teilprogramm ausgestattet ist und beispielsweise mit einer Computer-Cloud verbunden ist, auf der ein weiteres Teilprogramm ausgeführt wird.

Gleichermaßen wird die dargestellte Aufgabenstellung durch die erfindungsgemäße Steuereinheit gelöst. Die Steuereinheit verfügt über ein Rechenwerk und einen Speicher, die zu einem Steuern einer Fertigungsvorrichtung ausgebildet sind. Die Steuereinheit ist erfindungsgemäß mit einem Computerprogrammprodukt nach einer der oben beschriebenen Ausführungsformen ausgestattet. Alternativ oder ergänzend kann die Steuereinheit zum Durchführen zumindest einer Ausführungsform des oben skizzierten Verfahrens ausgebildet sein.

Die Aufgabenstellung wird auch durch die erfindungsgemäße Fertigungsvorrichtung gelöst, die eine Abgabevorrichtung für ein Grundmaterial aufweist, das für eine additiven Fertigung geeignet ist. Die Fertigungsvorrichtung weist auch eine Abgabevorrichtung für ein Härtungsmittel auf, das dem Grundmaterial hinzufügbar ist. Ferner umfasst die Fertigungsvorrichtung einen Laser auf, durch den das Grundmaterial lokal aufschmelzbar ist. Die Fertigungsvorrichtung ist insgesamt zu einer additiven Fertigung von Maschinenkomponenten ausgebildet. Erfindungsgemäß ist die Fertigungsvorrichtung mit einer Steuereinheit versehen, die nach einer der oben dargestellten Ausführungsformen ausgebildet ist.

Die zugrundeliegende Aufgabe wird auch durch eine Maschinenkomponente gelöst, die ein Grundmaterial umfasst, das durch Bestrahlen mit einem Laser gefügt ist. Darunter ist zu verstehen, dass das Grundmaterial durch das Bestrahlen mit dem Laser von einem pulverförmigen Zustand zu einem zusammenhängenden Werkstück umgewandelt ist. Dies kann beispielsweise vorliegen, wenn die Maschinenkomponente per additiver Fertigung hergestellt ist, insbesondere durch Selektives Laserschmelzen. Im Grundmaterial ist ein Härtungsmittel gelöst, durch das lokal eine Härte der Maschinenkomponente vorgegeben ist. Unter gelöst ist beispielsweise zu verstehen, dass die Atome des Härtungsmittels in einem Atomgitter des Grundmaterial eingelagert sind. Die Maschinenkomponente weist einen ersten Bereich auf, in dem eine erste Härte vorliegt. Ferner weist die Maschinenkomponente einen zweiten Bereich auf, in dem eine zweite Härte vorliegt. Der erste und zweite Bereich liegen benachbart zueinander. Dadurch entsteht an einer gemeinsamen Bereichsgrenze ein Übergang von der ersten Härte auf die zweite Härte. Der Übergang von der ersten Härte zur zweiten Härte ist hierbei im Wesentlichen als diskrete Stufe ausgebildet. Eine derartige diskrete Stufe ist beispielsweise durch ein Verfahren gemäß einer der oben skizzierten Ausführungsformen herstellbar. Dabei werden die Diffusionsstrecken für das Härtungsmittel in der Maschinenkomponente verkürzt, wodurch wiederum hohe Konzentrationsgradienten für das Härtungsmittel möglich sind. Diese führen wiederum zu im Wesentlichen stufenförmigen Härteübergängen in der Maschinenkomponente. Die erfindungsgemäße Maschinenkomponente kann jedoch auch jegliche andere Maschinenkomponente sein, die bei Fertigung mit bekannten Verfahren zu härten sind.

Des Weiteren kann die beanspruchte Maschinenkomponente als außenverzahntes Zahnrad, als innenverzahntes Hohlrad oder als Zahnstange ausgebildet sein. Insbesondere kann die Maschinenkomponente auch als jegliche andere Komponente mit einer Verzahnung ausgebildet sein. Bei der Herstellung von derartigen Maschinenkomponenten stellt die Härte und deren Verteilung an der Maschinenkomponente einen wesentlichen Konstruktionsaspekt dar. Eine entsprechende Maschinenkomponente ist deshalb ohne Weiteres an die sich ergebenden konstruktiven Erfordernisse durch eine im Wesentlichen willkürlich vorgebbare Verteilung der Härte anpassbar. Insbesondere kann so Zahnfußbruch oder Zahnflankenbruch vorgebeugt werden. Die beanspruchte Maschinenkomponente weist daher eine gesteigerte mechanische Leistungsfähigkeit und erhöhte Lebensdauer, und damit Zuverlässigkeit auf.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch einen Aufbau einer Fertigungsvorrichtung zur Durchführung einer Ausführungsform des beanspruchten Verfahrens;
- FIG 2: schematisch den Aufbau einer Materiallage während einer Ausführungsform des beanspruchten Verfahrens;
- FIG 3: schematisch einen Ablauf einer Ausführungsform des beanspruchten Verfahrens;
- FIG 4: schematisch eine Ausführungsform einer beanspruchten Maschinenkomponente;
- FIG 5: eine schematische Ansicht einer weiteren Ausführungsform der beanspruchten Maschinenkomponente.

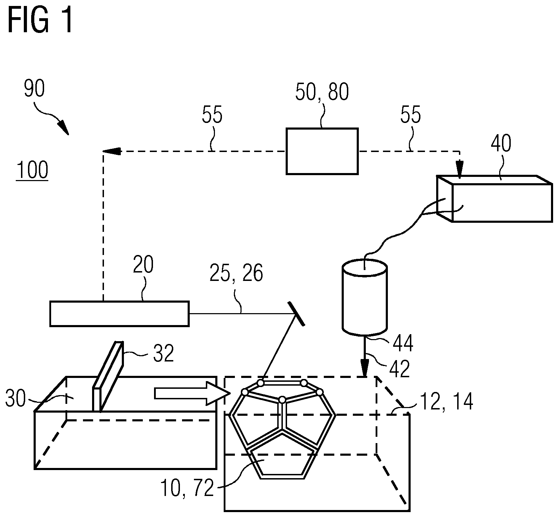

In FIG 1 ist schematisch ein Aufbau einer Fertigungsvorrichtung 90 gezeigt, mit der eine Ausführungsform des beanspruchten Verfahrens 100 durchführbar ist. Die Fertigungsvorrichtung 90 umfasst einen Rakel 32, mit dem ein Grundmaterial 30, das im Wesentlichen ein Metallpulver ist, in einem ersten Schritt 110 in einem Arbeitsbereich 14 aufgetragen wird. Zum Grundmaterial 30 wird mit einer Abgabevorrichtung 40 über eine Abgabevorrichtung 40 ein Härtungsmittel 42 dem Grundmaterial 30 hinzugefügt. Eine Abgabemenge des Härtungsmittels 42 ist über eine Abgabedüse 44 der Abgabevorrichtung 40 einstellbar. Das Härtungsmittel 42 kann als Kohlenstoff-Flüssigkeit oder als Kohlenstoff-Pulver ausgebildet sein. Zusammen bilden das Grundmaterial 30 und das Härtungsmittel 42 eine Materiallage 12. Die Abgabevorrichtung 40 ist beweglich ausgebildet, so dass eine Konzentration des Härtungsmittels 42 in der Ebene der Materiallage 12 im Wesentlichen willkürlich einstellbar ist. Die Materiallage 12 wird insgesamt im ersten Schritt 110 des Verfahrens 100 bereitgestellt.

In einem zweiten Verfahrensschritt 120 wird die Materiallage 12 durch einen Laser 20 bestrahlt. Dazu wird ein Laserstrahl 25 mit einer einstellbaren Intensität 26 auf die Materiallage 12 gelenkt. Durch den Laser 20 wird die Materiallage 12 lokal erwärmt, so dass das Grundmaterial 30 aufschmilzt. Der Laser 20 wird derart angesteuert, dass die bestrahlte Materiallage 12 eine herzustellende Maschinenkomponente 10 weiter aufbaut. Nach einem Passieren des Laserstrahls 25 auf der Materiallage 12 erstarrt das Grundmaterial 30 und schließt Härtungsmaterial 42 zumindest ein. Die so lokal vorliegenden Konzentrationen von Härtungsmittel 42 im aufgeschmolzenen und erstarrten Grundmaterial 42 erlauben es, in der herzustellenden Maschinenkomponente 10 eine Härte 72 einzustellen. Das Bestrahlen der Materiallage 12 erfolgt im beanspruchten Verfahren 100 im zweiten Schritt 120. Durch einen weiteren Wärmeeintrag mittels des Lasers 20 ist ferner eine in FIG 1 nicht näher dargestellte Diffusion 48 des Härtungsmittels 42 in das Grundmaterial 30 hervorrufbar. Die Fertigungsvorrichtung 90, insbesondere der Laser 20 und die Abgabevorrichtung 40 werden mittels einer Steuereinheit 50 gesteuert, die dazu ausgebildet ist, Steuerbefehle 55 auszugeben. Die Steuerbefehle 55 werden durch ein Computerprogrammprodukt 80 erzeugt, das in der Steuereinheit 50 ausführbar gespeichert ist.

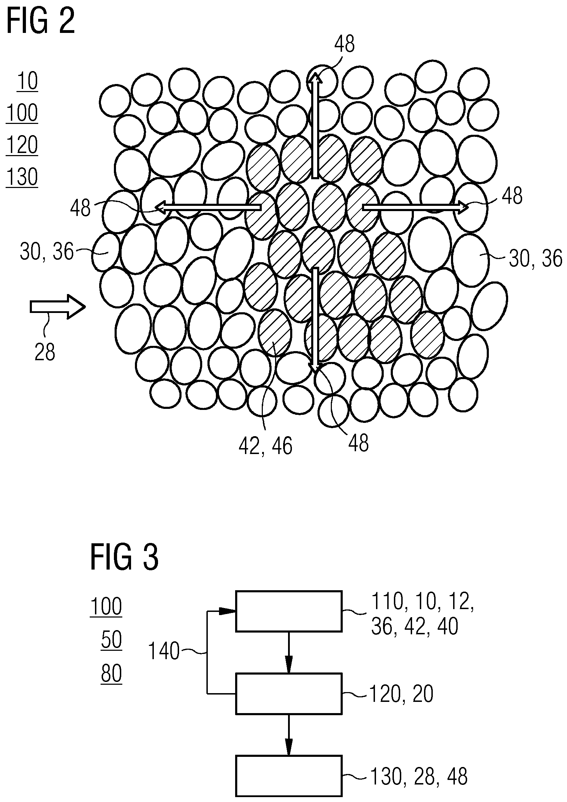

FIG 2 zeigt schematisch einen Aufbau einer Materiallage 12, wie sie während oder nach einem Bestrahlen mit einem Laser 20 gemäß einem zweiten Schritt 120 des beanspruchten Verfahrens 100 vorliegt. Die Materiallage 12 weist ein Grundmaterial 30 auf, das im Wesentlichen als Körner 36 vorliegt. In das Grundmaterial 30 ist das Härtungsmittel 42, das auch als Körner 46 vorliegt, eingeschlossen. Durch Wärmeenergie 28, die in die Materiallage 12 eingebracht wird, wird eine Diffusion 48 des Härtungsmittels 42 hervorgerufen. Das Härtungsmittel 42 ist in FIG 2 im Wesentlichen elementarer Kohlenstoff, der im zweiten Schritt 120 in der Materiallage 12 verbleibt. Das Härtungsmittel 42 wird durch die Diffusion 48 in das Grundmaterial 30 eingelagert und ruft so lokal eine Härtung des Grundmaterials 30 hervor. Die Wärmeenergie 28, durch die die Diffusion 48 hervorgerufen wird, kann im zweiten Schritt 120 durch den Laser 20 und/oder in Form von Prozesswärme, beispielsweise einem Härteofen, in einem dritten Schritt 130 zugeführt werden. Dadurch, dass das Härtungsmittel 42 im beanspruchten Verfahren 100 im Wesentlichen willkürlich aufbringbar ist, können so die weiteren Diffusionsstrecken, die für einen gewünschten Zielzustand der herzustellenden Maschinenkomponente 10 zurückzulegen sind, minimiert werden. Ausgehend vom Zielzustand kann sich ein Härteprozess anschließen, der ein Erwärmen und Abschrecken umfasst.

In FIG 3 ist ein schematischer Ablauf einer Ausführungsform des beanspruchten Verfahrens 100 abgebildet, mit den eine Maschinenkomponente 10 herzustellen ist. In einem ersten Schritt 110 wird eine Materiallage 12 bereitgestellt. Die Materiallage 12 umfasst ein Grundmaterial 30, dem ein Härtungsmittel 42 hinzugefügt wird. Das Härtungsmittel 42 wird mittels einer Abgabevorrichtung 40 auf die Materiallage 12 aufgebracht. Die Abgabevorrichtung 40 ist derart ansteuerbar, dass eine Abgabemenge des Härtungsmittels 42 lokal, also an unterschiedlichen Positionen innerhalb der Ebene der Materiallage 12, einstellbar ist. Dadurch ist im Wesentlichen eine beliebige Verteilung an Konzentrationen von Härtungsmittel 42 erzielbar. In einem zweiten Schritt 120 wird die Materiallage 12 mit einem Laser 20 bestrahlt, durch den die Materiallage 12 lokal aufgeschmolzen wird. Infolgedessen wird das Härtungsmittel 42 zumindest im Grundmaterial 30 eingeschlossen. Der erste und zweite Schritt 110, 120 wird, wie in der Rückholschleife 140 angedeutet, solange wiederholt, bis das die herzustellende Maschinenkomponente 10 mittels additiver Fertigung in seiner Grundform hergestellt ist. Es folgt darauf ein dritter Schritt 130, in dem die soweit erhaltene Maschinenkomponente 10 einer Umgebung ausgesetzt wird, in der ihr Wärmeenergie 28 zugeführt wird, beispielsweise durch einen Härteofen. Dadurch wird eine Diffusion 48 des Härtungsmittels 42 im Grundmaterial 30 hervorgerufen. Dadurch kann ein gewünschter Endzustand in der Maschinenkomponente 10 hervorgerufen werden.

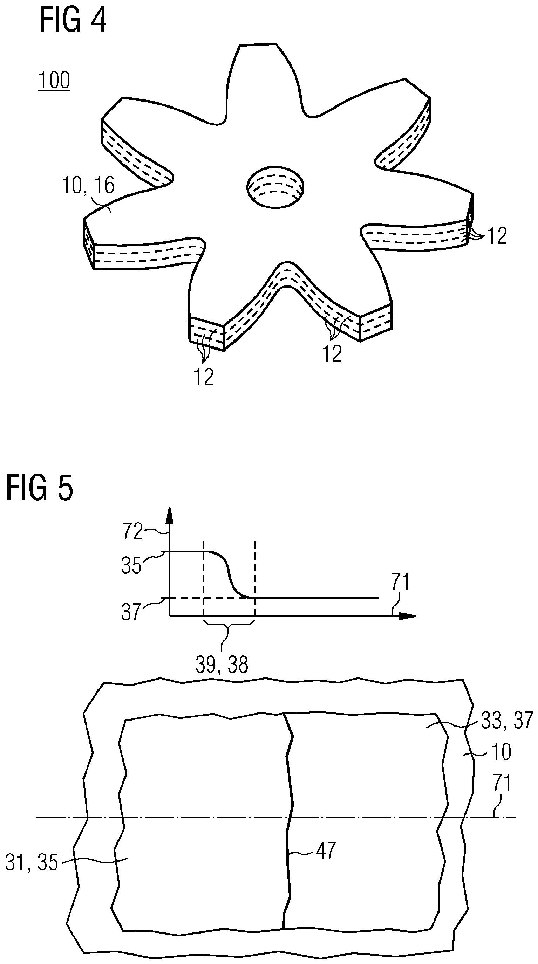

Eine Ausführungsform einer beanspruchten Maschinenkomponente 10 ist in FIG 4 abgebildet. Im Einzelnen zeigt FIG 4 ein außenverzahntes Zahnrad 16, das im Wesentlichen aus einer Mehrzahl an aufeinander geschichteten Materiallagen 12 hergestellt ist. Die Herstellung der Materiallagen 12 erfolgt dabei mit einem Verfahren 100 gemäß einer der oben skizzierten Ausführungsformen.

FIG 5 zeigt eine Detailansicht an einer Oberfläche einer Maschinenkomponente 10, wie beispielsweise in FIG 4 dargestellt. Die Maschinenkomponente 10 weist einen ersten Bereich 31 auf, in dem eine erste Härte 35 vorliegt. Benachbart hierzu ist ein zweiter Bereich 33 ausgebildet, in dem eine zweite Härte 37 vorliegt. Ferner zeigt FIG 5 oben ein Diagramm 70, das entlang der Bezugslinie 71 in der Horizontalen in der Zeichenebene einen Verlauf der vorliegenden Härte 72 zeigt. Im ersten Bereich 31 liegt die Härte 72 im Wesentlichen konstant in einem Wertebereich der ersten Härte 35. An einer Grenze 47 liegt ein Übergang 38 der Härte 72 vor. Der Übergang 38 vom Wertebereich der ersten zur zweiten Härte 35, 37 ist dabei im Wesentlichen als Stufe 39 ausgebildet. Die Maschinenkomponente 10 in FIG 5 ist mittels eines Verfahrens 100 nach einer der oben dargestellten Ausführungsformen hergestellt. Dadurch sind auch nahezu diskrete räumliche Verteilungen von Härten 72 in der Maschinenkomponente 10 erzielbar. Dadurch ist die Härte 72 im entsprechenden ersten und zweiten Bereich 35, 37 gezielt an konstruktive Erfordernisse der Maschinenkomponente 10 anpassbar.

## Patentansprüche

1. Verfahren (100) zum additiven Herstellen einer Maschinenkomponente (10), umfassend die Schritte:
a) Bereitstellen zumindest einer Materiallage (12);
b) Bestrahlen der Materiallage (12) mit einem Laser (20) zu einem lokalen Aufschmelzen der Materiallage (12);
**dadurch gekennzeichnet, dass** im Schritt a) einem Grundmaterial (30) der Materiallage (12) lokal einstellbar ein Härtungsmittel (42) hinzugefügt wird, und das Härtungsmittel (42) im Schritt b) durch das Bestrahlen mit dem Laser (20) im Grundmaterial (30) zumindest eingeschlossen wird.

2. Verfahren (100) nach Anspruch 1, **dadurch gekennzeichnet, dass** im Schritt b) das Härtungsmittel (42) zumindest teilweise im Grundmaterial (30) gelöst wird.

3. Verfahren (100) nach Anspruch 1 oder 2, **dadurch gekennzeichnet, dass** lokal eine Abgabemenge des Härtungsmittels (42) vorgebbar ist.

4. Verfahren (100) nach einem der Ansprüche 1 bis 3, **dadurch gekennzeichnet, dass** in einem weiteren Schritt c) ein Härten der Maschinenkomponente (10) zu einer Diffusion (48) des Härtungsmittels (42) im Grundmaterial (30) durchgeführt wird.

5. Verfahren (100) nach einem der Ansprüche 1 bis 4, **dadurch gekennzeichnet, dass** das Härtungsmittel (42) als Kohlenstoff-Pulver oder Kohlenstoff-Flüssigkeit ausgebildet ist.

6. Verfahren (100) nach einem der Ansprüche 1 bis 5, **dadurch gekennzeichnet, dass** das Grundmaterial (30) eine Eisen-basierte Legierung, eine Manganlegierung oder eine Nickel-Basislegierung ist.

7. Verfahren (100) nach einem der Ansprüche 1 bis 6, **dadurch gekennzeichnet, dass** zumindest die Schritte a) und b) für eine Mehrzahl an Materiallagen (12) wiederholt durchgeführt werden.

8. Verfahren (100) nach einem der Ansprüche 2 bis 7, **dadurch gekennzeichnet, dass** eine Intensität des Lasers (20) zu einem Einleiten einer Diffusion des Härtungsmittels (42) in das Grundmaterial (30) einstellbar ist.

9. Computerprogrammprodukt (80), das in einem Speicher einer Steuereinheit (50) ausführbar ist und zu einem Ausgeben von Steuerbefehlen (55) an zumindest eine Abgabevorrichtung (40) für ein Härtungsmittel (42) und an einen Laser (20) ausgebildet ist, **dadurch gekennzeichnet, dass** das Computerprogrammprodukt (80) zum Ausführen zumindest eines Verfahrens (100) nach einem der Ansprüche 1 bis 8 ausgebildet ist.

10. Steuereinheit (50), umfassend ein Rechenwerk und einen Speicher (54) zum Steuern einer Fertigungsvorrichtung (90), **dadurch gekennzeichnet, dass** die Steuereinheit (50) mit einem Computerprogrammprodukt (80) nach Anspruch 9 ausgestattet ist.

11. Fertigungsvorrichtung (90), umfassend eine Abgabevorrichtung (40) für ein Grundmaterial und eine Abgabevorrichtung (40) für ein Härtungsmittel (42) und einen Laser (20) zur additiven Herstellung von Maschinenkomponenten (10), **dadurch gekennzeichnet, dass** die Fertigungsvorrichtung (90) über eine Steuereinheit (50) nach Anspruch 10 verfügt.

12. Maschinenkomponente (10), umfassend ein Grundmaterial (30), das durch Bestrahlen mit einem Laser (20) gefügt ist, wobei im Grundmaterial (30) ein Härtungsmittel (42) gelöst ist, und die Maschinenkomponente (10) einen ersten Bereich (31) mit einer ersten Härte (35) und einen benachbarten zweiten Bereich (33) mit einer zweiten Härte (37) aufweist, **dadurch gekennzeichnet, dass** ein Übergang (38) von der ersten auf die zweite Härte (37) als diskrete Stufe (39) ausgebildet ist.

13. Maschinenkomponente (10) nach Anspruch 12, **dadurch gekennzeichnet, dass** die Maschinenkomponente (10) als außenverzahntes Zahnrad (16), als innenverzahntes Hohlrad oder als Zahnstange ausgebildet ist.
